# FASCICULE DE BREVET EUROPEEN

(11) **EP 3 164 908 B1**
(45) Date de publication et mention de la délivrance du brevet: **16.05.2018**
(21) Numéro de dépôt: 15753716.8
(22) Date de dépôt: 30.06.2015
(51) Int. Cl.: H01Q 1/38, H01Q 1/22, H01Q 7/00, G06K 19/077

(54) **SUPPORT D'ANTENNE DESTINÉ À ÊTRE INTEGRÉ DANS UN DOCUMENT ÉLECTRONIQUE**
ANTENNENTRÄGER ZUM EINBAU IN EINEM ELEKTRONISCHEN DOKUMENT
ANTENNA CARRIER INTENDED FOR BEING BUILT INTO AN ELECTRONIC DOCUMENT

(30) Priorité: 01.07.2014 FR 1456270
(43) Date de publication de la demande: 10.05.2017
(73) Titulaire: IDEMIA France, 92700 Colombes (FR)
(72) Inventeur: GRAGNIC, Elodie, F-92700 Colombes (FR); BOSQUET, Olivier, F-92700 Colombes (FR)
(74) Mandataire: Perrot, Emilie
(86) Numéro de dépôt international: PCT/FR2015/051783
(87) Numéro de publication internationale: WO 2016/001569

(56) Documents cités:
- EP-A2- 2 637 129
- WO-A1-2013/063870
- US-A1- 2013 075 134

## Description

L'invention concerne un support d'antenne, appelé aussi inlay, et des documents électroniques tels que des cartes ou documents d'identités intégrant de tels supports.

Plus particulièrement l'invention concerne un support d'antenne comportant un premier substrat en plastique délimité par une première et une deuxième faces opposées définissant entre elles une épaisseur de substrat, l'antenne comportant au moins une spire qui s'étend entre deux extrémités, l'antenne étant formée d'un fil incrusté dans l'épaisseur du premier substrat à partir de la première face, les deux extrémités présentant chacune une forme en zigzag formée d'au moins deux parties rectilignes et deux détours.

Il est connu de l'art antérieur des supports d'antenne destinés à être insérés dans un document électronique tel qu'une carte à microcircuit. Les supports d'antenne, appelés aussi inlays, sont traditionnellement fabriqués selon un procédé par ultrason tel que décrit dans les documents US6 233 818 et EP0 880 754. Ce procédé consiste à étendre un fil métallique conducteur sur un substrat au moyen d'un outil, tel qu'une sonotrode, se déplaçant au-dessus du substrat et distribuant le fil. Le fil est incrusté dans le substrat au moyen de vibrations à ultrason transmises depuis l'outil au fil. Les vibrations sont transmises perpendiculairement au substrat pour incruster le fil dans l'épaisseur du substrat. De préférence, le fil est entouré d'une gaine qui est chauffée pendant un intervalle de temps très court, ce qui améliore l'adhérence de la gaine entourant le fil dans le substrat.

L'outil est commandé depuis un moyen de contrôle permettant de définir la trajectoire de dépose du fil. Il est ainsi possible d'enrouler le fil en plusieurs spires et/ou de le déposer sous des formes diverses, telle qu'un zigzag ou un lacet. On entend par zigzag ou lacet, une ligne sinueuse présentant des courbes dirigées alternativement et en sens contraire. Plus particulièrement une forme en zigzag comporte alternativement des parties rectilignes et des détours. Cette forme est illustrée dans les documents EP 1 021 792 et US 2013/0075134 qui décrivent une carte à puce dont les extrémités de l'antenne présentent une forme en zigzag. Ces extrémités sont destinées à être électriquement connecté à un microcircuit monté dans la carte pour permettre un fonctionnement de la carte sans contact avec un lecteur distant.

Toutefois il a été constaté que le dépôt d'un fil sous la forme d'un zigzag diminue les capacités d'adhésion du fil dans le substrat. Notamment les détours du zigzag présentent un taux d'adhésion plus faible que les parties rectilignes et ont tendance à se redresser à cause des contraintes mécaniques dues aux pliures ou à cause de la traction exercée par l'outil lors de la dépose de la partie rectiligne consécutive. Les détours présentent donc un risque d'arrachement et de rupture du fil plus élevé, notamment lors de la manipulation et du transport des supports d'antenne. Ces inconvénients entrainent alors un taux plus élevé de rupture électrique entre l'antenne et un microcircuit d'un document électronique, rendant le document électronique non valide.

Il a donc été cherché une solution pour améliorer le maintien des détours dans le substrat du support d'antenne.

A cet effet l'invention propose un support d'antenne destiné à être intégré dans un document électronique, dans lequel les détours sont incrustés plus profondément que les parties rectilignes dans l'épaisseur du premier substrat depuis la première face.

Grâce à ces dispositions les détours sont incrustés plus profondément dans l'épaisseur du matériau constituant le substrat et sont, par conséquent, maintenus par une plus grande quantité de matière les enrobant.

L'invention porte aussi sur un document électronique comportant un support d'antenne et un deuxième substrat assemblé au premier substrat de sorte que l'antenne soit emprisonnée entre les deux substrats, une cavité ouverte comportant un fond dans lequel débouche au moins une section usinée d'une partie rectiligne formant les extrémités d'antenne, un moyen de connexion électrique recouvrant au moins partiellement les sections usinées du fil d'antenne, un module à microcircuit encarté dans la cavité et en contact électrique avec les sections usinées par l'intermédiaire du moyen de connexion.

Grâce à ces dispositions, les détours sont noyés dans le matériau constituant le substrat. Les détours sont ainsi non seulement maintenus par le matériau du substrat, mais aussi situés en dessous du plan d'usinage, et donc non exposés à la fraise d'usinage. Ces dispositions réduisent considérablement le risque d'arrachage des détours.

Selon d'autres caractéristiques :
- les détours sont incrustés d'une profondeur au moins égale à 20µm par rapport aux parties rectilignes ;
- le moyen de connexion électrique est un adhésif anisotropique recouvrant les sections usinées des parties rectilignes;
- la cavité est formée d'un premier lamage et d'un lamage secondaire réalisé dans le premier lamage, les sections usinées débouchant dans le fond du premier lamage.

L'invention concerne aussi un procédé de fabrication d'un support d'antenne qui comporte au moins une étape d'incrustation de l'antenne filaire dans le premier substrat au moyen d'un outil adapté à distribuer et incruster le fil, l'outil se déplaçant à une vitesse par rapport au substrat, la vitesse v1 de dépose des détours étant au plus égale à 0,75 fois la vitesse v2 de dépose des parties rectilignes ;

Selon d'autres caractéristiques :
- le procédé comporte au moins une étape d'incrustation de l'antenne filaire dans le premier substrat au moyen d'un outil adapté à distribuer et incruster le fil et exerçant une force d'appui contre le premier substrat, la force d'appui appliquée pour la dépose des détours étant au moins égale à 1,25 fois la force appliquée pour la dépose des parties rectilignes;
- le procédé comporte au moins une étape d'incrustation de l'antenne filaire dans le premier substrat au moyen d'un outil adapté à distribuer et incruster le fil par ultrason à une fréquence déterminée, la fréquence appliquée pour la dépose des détours étant au moins égale à 1,25 fois la fréquence appliquée pour la dépose des parties rectilignes ;
- les parties rectilignes sont espacées les unes par rapport aux autres d'un intervalle au moins égal à une fois le diamètre du fil d'antenne ;
- le procédé de fabrication d'un document électronique comporte les étapes suivantes : fabrication d'un support d'antenne, assemblage d'au moins un deuxième substrat par une étape de laminage, usinage d'une cavité ouverte et présentant une profondeur telle qu'une section usinée d'une partie rectiligne débouche dans le fond de la cavité, mise en place du module à microcircuit dans la cavité et connexion électrique entre le module et les extrémités de l'antenne ;
- l'usinage est réalisé de sorte que la section usinée d'une partie rectiligne présente une largeur comprise entre 0,4 et 0,6 fois le diamètre du fil d'antenne.
- le procédé de fabrication comporte une étape de dépose d'un adhésif anisotropique entre le module et le fond de la cavité, préalablement à l'étape de mise en place du module à microcircuit, puis une étape de compression du module dans la cavité pour adhérer le module dans la cavité et activer la connexion électrique.

La présente invention sera mieux comprise à la lecture de la description détaillée faite en référence aux dessins annexés dans lesquels :
- La figure 1 est une vue en élévation d'un support d'antenne selon l'invention,
- La figure 2a est une vue en coupe selon A-A du support d'antenne illustré à la figure 1, et la figure 2b est une vue en coupe selon un plan perpendiculaire au plan A-A,
- Les figures 3a et 3b représentent respectivement des vues similaires aux vues 2a et 2b des parties rectilignes usinées,
- La figure 4 illustre une vue en perspective d'une carte à microcircuit comportant un support d'antenne selon l'invention.

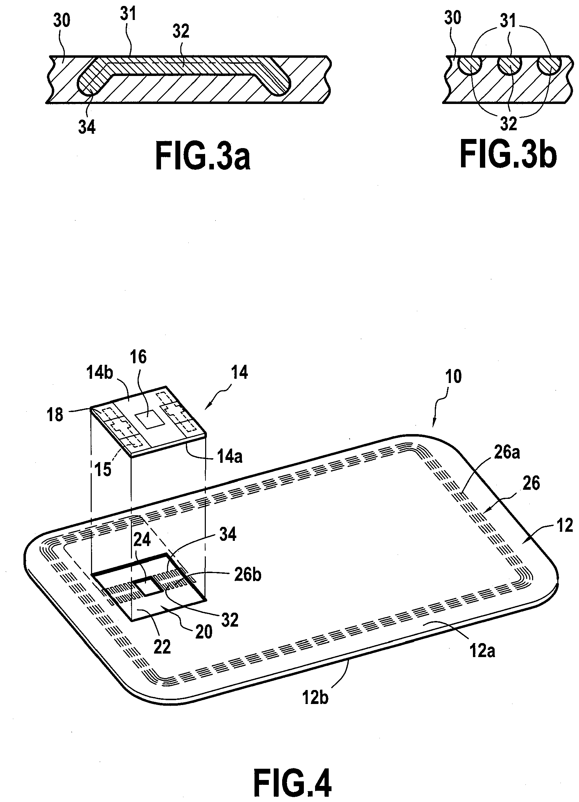

Une carte 10 à microcircuit illustrée à la figure 4, comprend un corps 12 en plastique délimité entre une face avant 12a et une face arrière 12b. Ce corps 12 est une plaque de plastique mince. Les dimensions des cartes sont spécifiées dans les normes ISO7810 et ISO7816 et présentent les valeurs suivantes : 85mm*54mm*0,76mm. L'épaisseur est négligeable par rapport à ses dimensions en largeur et en longueur.

Un tel corps 12 est réalisé par tout moyen. Un moyen classique est un laminage à chaud de couches plastiques. Les couches ont des fonctions diverses. Ainsi une couche interne centrale ou substrat peut être une couche de structure conférant au corps 12 et à la carte 10 sa rigidité ou servir de support à un composant électronique. Des couches intermédiaires, de part et d'autre du substrat, peuvent comprendre des inscriptions ou décors à fonction informative ou décorative. Des couches externes, avantageusement transparentes, terminent typiquement l'empilage et réalisent en surface une protection des couches plus internes.

La carte 10 comporte en outre un module 14 à microcircuit, formé d'une plaque à circuit imprimé de fine épaisseur. La plaque à circuit imprimé présente une face interne 14a sur laquelle est montée une puce 16, ou microcircuit. La face externe 14b de la plaque à circuit imprimé comporte des surfaces de contact métallisées 18 reliées d'une part au microcircuit et destinés à venir en contact avec des broches d'un lecteur externe d'autre part. Les surfaces de contact métallisées 18 permettent ainsi à la carte 10 de communiquer avec un terminal externe par contact physique. De plus la face interne 14a du module 14 comporte des plots de connexion 15 reliés au microcircuit et destinés à être connectés électriquement avec un composant électronique disposé dans le corps 12 de la carte 10.

Dans le corps 12 de la carte 10 est réalisée une cavité 20 ouverte et débouchante sur la face avant 12a de la carte 10. La carte 10 reçoit le module 14 à microcircuit. Cette cavité 20 comporte un premier lamage 22 et un lamage secondaire 24, réalisé dans le premier lamage 22, et permettant de laisser de la place pour le microcircuit.

Il est aussi connu des cartes dites « duales » qui sont adaptés à communiquer soit avec des lecteurs externes par contact physique avec des broches tel que décrit précédemment ou soit à distance, sans contact physique, au moyen d'une antenne 26. Ces cartes intègrent alors une telle antenne 26 dans son corps 12. A cet effet un support d'antenne 28 forme une couche interne de la carte 10 et est inséré entre les autres couches avant l'opération de laminage. Le support d'antenne 28 est formé d'un substrat 30 en plastique, tel que du PET, du PVC ou du polycarbonate, délimité par deux faces opposées 30a, 30b définissant entre elles l'épaisseur du substrat 30. Un fil formant l'antenne 26 est déroulé et incrusté sur le support d'antenne 28, puis celui-ci est recouvert par les autres couches et ensuite laminée avec ces couches.

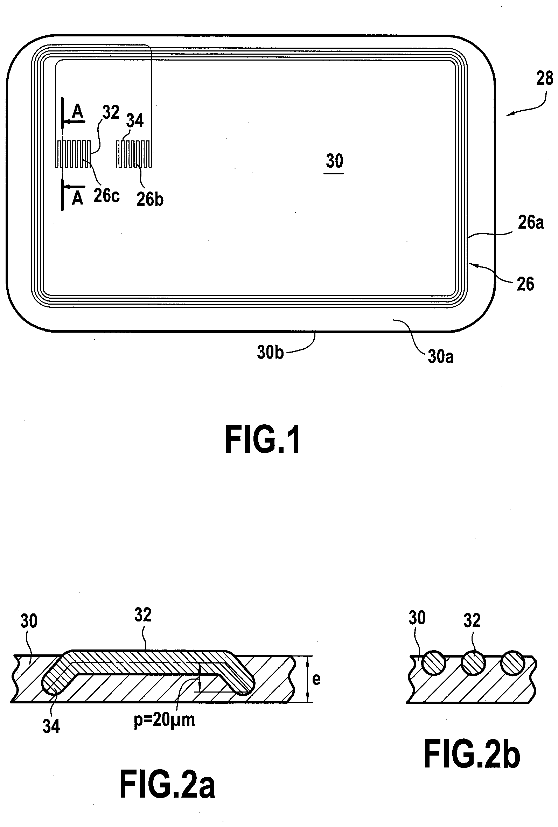

L'antenne 26 consiste en un enroulement. Elle comprend au moins une spire 26a et deux extrémités 26b, 26c entre lesquelles s'étend la spire 26a. Les extrémités 26b, 26c de l'antenne 26 présentent chacune une forme en zigzag formée d'au moins deux parties rectilignes 32 et deux détours 34 tel que visible sur les figures 1 et 4. Le fil d'antenne 26 est incrusté dans l'épaisseur du premier substrat 30 à partir d'une première face 30a de sorte que les parties rectilignes 32 s'étendent sensiblement dans un même plan, c'est-à-dire qu'en section, selon un plan perpendiculaire au plan du substrat 30, les parties rectilignes 32 s'étendent selon une droite parallèle au plan du support.

Afin d'améliorer le maintien des détours 34 et de diminuer considérablement leur risque d'arrachement lors de l'étape d'usinage, l'invention propose un support d'antenne 28 dans lequel les détours 34 sont incrustés plus profondément que les parties rectilignes 32 dans l'épaisseur du support d'antenne 28 depuis la première face 30a.

A cet effet les détours 34 sont incrustés à une profondeur p d'environ de 20µm minimum par rapport au parties rectilignes 32 depuis la première face 30a. Mais cette valeur peut être modifiée selon l'épaisseur du support et le diamètre initial du fil. Le décalage de 20µm est estimé entre les axes centraux respectifs d'une partie rectiligne et d'un détour, comme cela est visible sur la figure 2a. Plus le diamètre initial du fil formant l'antenne est important plus le décalage pourra être élevé. Grâce à ces dispositions, les détours 34 sont protégés par la matière du substrat 30 dans lequel ils sont insérés. Il en ressort un risque d'arrachement des extrémités 26b, 26c de l'antenne 26 largement diminué par rapport aux solutions de l'art antérieur.

La réalisation par usinage de la cavité 20 ouverte apte à accueillir un module 14, va faire apparaître les parties rectilignes 32 des extrémités 26b, 26c de contact. L'usinage va permettre de réaliser la cavité 20 et la profondeur de cette cavité 20 est déterminée de sorte que les parties rectilignes 32 débouchent dans le fond de la cavité 20. De plus, avantageusement, cette opération permet de décaper les parties rectilignes 32 en surface afin de les débarrasser d'un éventuel matériau isolant telle qu'un émail ou une gaine. Grâce aux dispositions de la présente invention, la fraise réalise un usinage des parties rectilignes 32 dans un plan d'usinage situé au-dessus du plan des détours 34.

Dans un mode de réalisation préféré, la cavité 20 comporte deux lamages 22, 24 et des sections usinées 31 des parties rectilignes 32 débouchent dans ledit premier lamage 22 et affleurent le fond du premier lamage 22, qui correspond à la surface sur laquelle le module 14 vient en appui. Les extrémités 26b, 26c de l'antenne 26 sont reliées électriquement avec le microcircuit par l'intermédiaire des plots de connexion 15 disposés sur la face interne 14a du module 14. Les sections usinées 31 des parties rectilignes 32 et le plot de connexion relié à la puce 16 du module 14 sont disposés en regard de sorte à obtenir une zone de connexion électrique importante.

Les extrémités 26b, 26c de l'antenne 26 sont ainsi au moins partiellement accessibles pour réaliser une connexion électrique.

Afin de garantir une bonne connexion électrique entre le module 14 et les extrémités 26b, 26c de l'antenne 26, il est préférable d'avoir une surface de contact suffisante entre les extrémités 26b, 26c de l'antenne 26 et le plot de connexion du module 14. Cette surface de contact suffisante est déterminée par la surface de fil usiné et accessible depuis le fond du premier lamage22.

La quantité de fil déposé dépend du diamètre du fil initial. L'intervalle de matière entre chaque partie rectiligne 34 dépend du diamètre du fil. Notamment l'intervalle minimum entre deux parties rectilignes augmente lorsque le diamètre du fil augmente, de sorte à dégager une zone minimum du substrat 30 en plastique servant à l'adhérence du module 14. De préférence, l'intervalle minimum est au moins égal à une fois le diamètre du fil d'antenne 26.

Le support d'antenne 28 est réalisé selon un procédé connu de l'art antérieur et brièvement décrit dans le préambule de la présente description. Le procédé est mis en oeuvre par un outil comportant des moyens pour distribuer le fil d'antenne et l'incruster dans le substrat 30 du support d'antenne 28. A cet effet l'outil comporte un moyen de distribution tel qu'une buse adaptée à déverser de façon progressive le fil sur le substrat 30. L'outil comporte aussi des moyens de contrôle pour modifier les paramètres de vitesse de déplacement de la buse et de vitesse de distribution du fil. Eventuellement, l'outil comporte des moyens de contrôle permettant de modifier la force appliquée lors de la dépose du fil. A cet effet si le fil est déposé au moyen d'une sonotrode, il peut être envisagé de modifier la fréquence et l'amplitude des vibrations à ultrason. En effet, plus la fréquence augmente, plus le fil est enfoncé dans le substrat. Avantageusement, les retours sont déposés au moyen d'une sonotrode soumise à des ultrasons à une fréquence au moins égale à 1,25 fois la fréquence appliquée pour les parties rectilignes. Enfin l'outil peut comporter des moyens de chauffage pour effectuer un chauffage local entraînant une légère fusion de plastique et / ou de la gaine du fil

Ainsi le procédé comporte une étape d'incrustation de l'antenne filaire dans le premier substrat 30 au moyen de l'outil se déplaçant à une vitesse par rapport au substrat 30, la vitesse v1 de dépose des détours 34 étant au plus égale à 0,75 fois la vitesse v2 de dépose des parties rectilignes 32. De préférence, la vitesse v1 est comprise entre 0,3 et 0,5 fois la vitesse v2. Grâce au ralentissement de l'outil lors de la dépose du fil, les détours 34 présentent un temps d'incrustation plus long ce qui a pour effet de les positionner plus profondément que les parties rectilignes 32.

Selon une variante de réalisation, le procédé de fabrication comporte une étape d'incrustation dans laquelle la force d'appui appliquée contre le premier substrat 30 pour la dépose des détours 34 est au moins égale à 1,25 fois la force appliquée pour la dépose des parties rectilignes 32. Ces dispositions garantissent une pénétration plus profonde des détours 34 dans le substrat 30. Selon un mode de réalisation préféré, les paramètres de l'outil incrustant le fil dans le substrat 30 sont modifiés pour ralentir et exercer une force plus importante lors de la dépose des détours 34.

Les parties rectilignes 32 sont déposées dans le substrat 30 de sorte qu'elles s'alignent sensiblement parallèlement les unes aux autres et sont espacées d'un intervalle minimum. De plus les parties rectilignes 32 sont incrustées sensiblement dans le même plan d'incrustation lui-même parallèle à la face externe 12a du substrat 30. Ces dispositions assurent que les parties rectilignes 32 sont positionnées à une profondeur constante de manière à garantir une fenêtre d'usinage la plus grande possible. La profondeur de la cavité 20 est alors choisie pour que les parties rectilignes 32 des extrémités 26b, 26c de l'antenne soient brossées selon un plan sensiblement parallèle au plan du premier substrat 30 de sorte à rendre accessible au moins une section usinée 31 des parties rectilignes. Des vues de côté des sections usinées 31 sont représentée sur les figures 3a et 3b. Avantageusement, la section usinée est réalisée dans une épaisseur comprise entre 10% et 40% du diamètre du fil formant l'antenne.

L'invention concerne aussi un procédé de fabrication d'un document électronique, tel qu'une carte 10 de format bancaire ou une carte d'identité dont les dimensions sont spécifiées dans les normes ISO 7816. Le procédé de fabrication consiste à intégrer le support d'antenne 28 décrit précédemment dans un corps 12 de carte 10. A cet effet, le support d'antenne 28 est assemblé avec d'autres couches en plastique, telles que du PET, du PVC ou du polycarbonate par un procédé de lamination à chaud permettant de faire adhérer les différentes couches entre elles. Le corps 12 de carte obtenu est ensuite usiné de sorte à former une cavité 20 débouchante sur la face avant 12a du corps 12 de carte 10. La profondeur d'usinage est déterminée selon la position des extrémités 26b, 26c de l'antenne dans l'épaisseur du corps 12 de carte 10. Tout particulièrement la profondeur de la cavité 20 est déterminée de sorte que les parties rectilignes 32 des extrémités 26b, 26c de l'antenne soient usinées partiellement. Une section usinée 31 des parties rectilignes 32 est alors accessible et est destinée à être connectée électriquement aux plots de contact du module 14.

Un adhésif anisotropique est ensuite déposé sur le fond de la cavité 20 ou sur la face interne 14a du module 14. Cet adhésif va permettre de maintenir le module 14 en place et présente des propriétés de conductivité électrique pour permettre la connexion électrique entre les sections usinées 31 et les plots de contact du module 14.

Le module 14 est alors mis en place dans la cavité 20 de sorte que les plots soient disposés en regard des extrémités 26b, 26c de l'antenne, puis le module 14 est alors encarté, c'est-à-dire mis en place et comprimé pour rendre l'adhésif anisotropique conducteur selon une seule direction.

## Revendications

1. Support d'antenne destiné à être intégré dans un document électronique, le support comportant:
- un premier substrat (30) en plastique, délimité par une première et une deuxième faces (30a, 30b) opposées définissant entre elles une épaisseur de substrat (30),
- une antenne comportant au moins une spire (26a) qui s'étend entre deux extrémités (26b, 26c), l'antenne étant formée d'un fil incrusté dans l'épaisseur du premier substrat (30) à partir de la première face (30a), les deux extrémités (26b, 26c) présentant chacune une forme en zigzag formée d'au moins deux parties rectilignes (32) et deux détours (34),
**caractérisé en ce que** les détours (34) sont incrustés plus profondément que les parties rectilignes (32) dans l'épaisseur du premier substrat (30) depuis la première face (30a).

2. Support d'antenne selon la revendication 1 dans lequel les détours (34) sont incrustés d'une profondeur au moins égale à 20µm par rapport aux parties rectilignes (32).

3. Document électronique comportant :
- un support d'antenne (28) selon la revendication 1 ou 2,
- et un deuxième substrat assemblé au premier substrat (30) de sorte que l'antenne soit emprisonnée entre les deux substrats,
- une cavité (20) ouverte comportant un fond dans lequel débouche au moins une section usinée (31) d'une partie rectiligne des extrémités (26b, 26c) de l'antenne,
- un moyen de connexion électrique recouvrant au moins partiellement les sections usinées (31) d'une partie rectiligne des extrémités (26b, 26c) de l'antenne,
- un module (14) à microcircuit inséré et fixé dans la cavité (20) et en contact électrique avec les sections usinées (31) par l'intermédiaire du moyen de connexion.

4. Document électronique selon la revendication 3, dans lequel le moyen de connexion électrique est un adhésif anisotropique recouvrant les sections usinées (31) des parties rectilignes (32).

5. Document électronique selon la revendication 3 ou 4, dans lequel la cavité (20) est formée d'un premier lamage (22) et d'un lamage secondaire (24) réalisé dans le premier lamage (22), les sections usinées débouchant dans le fond du premier lamage (22).

6. Procédé de fabrication d'un support d'antenne selon l'une des revendications 1 ou 2, **caractérisé en ce qu'**il comporte au moins une étape d'incrustation de l'antenne (26) filaire dans le premier substrat (30) au moyen d'un outil adapté à distribuer et incruster le fil.

7. Procédé de fabrication selon la revendication 6, dans lequel l'outil se déplace à une vitesse par rapport au substrat (30), la vitesse v1 de dépose des détours (34) étant au plus égale à 0,75 fois la vitesse v2 de dépose des parties rectilignes (32).

8. Procédé de fabrication selon la revendication 6 ou 7, dans lequel l'outil exerce une force d'appui contre le premier substrat (30), la force d'appui appliquée pour la dépose des détours (34) étant au moins égale à 1,25 fois la force appliquée pour la dépose des parties rectiligne.

9. Procédé de fabrication selon l'une des revendications 6 à 8, dans lequel l'outil distribue et incruste le fil par ultrason à une fréquence déterminée, la fréquence appliquée pour la dépose des détours (34) étant au moins égale à 1,25 fois la fréquence appliquée pour la dépose des parties rectilignes.

10. Procédé de fabrication d'un support d'antenne selon l'une des revendications 6 à 9, dans lequel les parties rectilignes (32) sont espacées les unes par rapport aux autres d'un intervalle au moins égal à une fois le diamètre du fil d'antenne (26).

11. Procédé de fabrication d'un document électronique selon l'une des revendications 3 à 5, **caractérisé en ce qu'**il comporte les étapes suivantes :
- fabrication d'un support d'antenne (28) selon le procédé de l'une des revendications 6 à 10,
- assemblage d'au moins un deuxième substrat (30) par une étape de laminage,
- usinage d'une cavité (20) ouverte et présentant une profondeur telle qu'une section usinée d'une partie rectiligne débouche dans le fond de la cavité (20),
- mise en place du module (14) à microcircuit dans la cavité (20) et connexion électrique entre le module (14) et les extrémités (26b, 26c) de l'antenne (26).

12. Procédé de fabrication d'un document électronique selon la revendication 11, dans lequel l'usinage est réalisé de sorte que la section usinée (31) d'une partie rectiligne présente une largeur comprise entre 0,4 et 0,6 fois le diamètre du fil d'antenne (26).

13. Procédé de fabrication selon la revendication 11 ou 12, comportant une étape de dépose d'un adhésif anisotropique entre le module (14) et le fond de la cavité, préalablement à l'étape de mise en place du module (14) à microcircuit, puis une étape de compression du module (14) dans la cavité (20) pour adhérer le module (14) dans la cavité (20) et activer la connexion électrique.

## Patentansprüche

1. Antennenträger, der dazu bestimmt ist, in ein elektronisches Dokument integriert zu werden, wobei der Träger umfasst:
- ein erstes Substrat (30) aus Kunststoff, das durch eine erste und eine zweite Seite (30a, 30b), die einander gegenüberliegen und zwischen denen eine Substratdicke (30) definiert ist, begrenzt ist,
- eine Antenne, die wenigstens eine Windung (26a) umfasst, die sich zwischen zwei Enden (26b, 26c) erstreckt, wobei die Antenne von einem Draht gebildet ist, der in die Dicke des ersten Substrats (30) von der ersten Seite (30a) aus eingelegt ist, wobei die beiden Enden (26b, 26c) jeweils eine Zickzack-Form aufweisen, die von wenigstens zwei geradlinigen Teilen (32) und zwei Wendungen (34) gebildet ist,
**dadurch gekennzeichnet, dass** die Wendungen (34) tiefer als die geradlinigen Teile (32) in die Dicke des ersten Substrats (30) von der ersten Seite (30a) aus eingelegt sind.

2. Antennenträger nach Anspruch 1, bei dem die Wendungen (34) um eine Tiefe von wenigstens gleich 20 µm gegenüber den geradlinigen Teilen (32) eingelegt sind.

3. Elektronisches Dokument, umfassend:
- einen Antennenträger (28) nach Anspruch 1 oder 2, und
- ein mit dem ersten Substrat (30) zusammengefügtes zweites Substrat, so dass die Antenne zwischen den beiden Substraten eingeschlossen ist,
- einen offenen Hohlraum (20), der einen Boden aufweist, in den wenigstens ein bearbeiteter Abschnitt (31) eines geradlinigen Teils der Enden (26b, 26c) der Antenne mündet,
- ein elektrisches Verbindungsmittel, das die bearbeiteten Abschnitte (31) eines geradlinigen Teils der Enden (26b, 26c) der Antenne wenigstens teilweise bedeckt,
- ein Mikroschaltkreismodul (14), das in den Hohlraum (20) eingesetzt und darin fixiert ist und mit den bearbeiteten Abschnitten (31) über das Verbindungsmittel in elektrischem Kontakt ist.

4. Elektronisches Dokument nach Anspruch 3, bei dem das elektrische Verbindungsmittel ein anisotropes Klebemittel ist, das die bearbeiteten Abschnitte (31) der geradlinigen Teile (32) bedeckt.

5. Elektronisches Dokument nach Anspruch 3 oder 4, bei dem der Hohlraum (20) von einer ersten Senkung (22) und von einer Nebensenkung (24), welche in der ersten Senkung (22) ausgebildet ist, gebildet ist, wobei die bearbeiteten Abschnitte in den Boden der ersten Senkung (22) münden.

6. Verfahren zur Herstellung eines Antennenträgers nach einem der Ansprüche 1 oder 2, **dadurch gekennzeichnet, dass** es wenigstens einen Schritt des Einlegens der Drahtantenne (26) in das erste Substrat (30) mittels eines Werkzeugs, das zum Verteilen und Einlegen des Drahtes ausgelegt ist, umfasst.

7. Herstellungsverfahren nach Anspruch 6, bei dem sich das Werkzeug mit einer Geschwindigkeit gegenüber dem Substrat (30) bewegt, wobei die Geschwindigkeit v1 des Ablegens der Wendungen (34) höchstens gleich dem 0,75-fachen der Geschwindigkeit v2 des Ablegens der geradlinigen Teile (32) ist.

8. Herstellungsverfahren nach Anspruch 6 oder 7, bei dem das Werkzeug eine Auflagekraft auf das erste Substrat (30) ausübt, wobei die Auflagekraft, die zum Auflegen der Wendungen (34) angelegt wird, wenigstens gleich dem 1,25-fachen der zum Auflegen der geradlinigen Teile angelegten Kraft ist.

9. Herstellungsverfahren nach einem der Ansprüche 6 bis 8, bei dem das Werkzeug den Draht mittels Ultraschall mit einer bestimmten Frequenz verteilt und einlegt, wobei die für das Auflegen der Wendungen (34) angelegte Frequenz wenigstens gleich dem 1,25-fachen der für das Auflegen der geradlinigen Teile angelegten Frequenz ist.

10. Verfahren zur Herstellung eines Antennenträgers nach einem der Ansprüche 6 bis 9, bei dem die geradlinigen Teile (32) um einen Abstand von wenigstens gleich dem 1-fachen des Durchmessers des Antennendrahtes (26) voneinander beabstandet sind.

11. Verfahren zur Herstellung eines elektronischen Dokuments nach einem der Ansprüche 3 bis 5, **dadurch gekennzeichnet, dass** es die folgenden Schritte umfasst:
- Herstellen eines Antennenträgers (28) nach dem Verfahren von einem der Ansprüche 6 bis 10,
- Anfügen wenigstens eines zweiten Substrats (30) durch einen Laminierschritt,
- Bearbeiten eines offenen Hohlraums (20), der eine solche Tiefe aufweist, dass ein bearbeiteter Abschnitt eines geradlinigen Teils in den Boden des Hohlraums (20) mündet,
- Anordnen des Mikroschaltkreismoduls (14) in dem Hohlraum (20) und elektrisches Verbinden zwischen dem Modul (14) und den Enden (26b, 26c) der Antenne (26).

12. Verfahren zur Herstellung eines elektronischen Dokuments nach Anspruch 11, bei dem das Bearbeiten derart vollzogen wird, dass der bearbeitete Abschnitt (31) eines geradlinigen Teils eine Breite im Bereich zwischen dem 0,4- und dem 0,6-fachen des Durchmessers des Antennendrahtes (26) aufweist.

13. Herstellungsverfahren nach Anspruch 11 oder 12, umfassend einen Schritt des Abscheidens eines anisotropen Klebemittels zwischen dem Modul (14) und dem Boden des Hohlraums vor dem Schritt des Anordnens des Mikroschaltkreismoduls (14), anschließend einen Schritt des Komprimierens des Moduls (14) in dem Hohlraum (20), um das Modul (14) in dem Hohlraum (20) festzukleben und die elektrische Verbindung zu aktivieren.

## Claims

1. An antenna support for incorporating in an electronic document, the support comprising:
• a first substrate (30) made of plastics material, being defined by first and second opposite faces (30a, 30b) defining between them a thickness of the substrate (30) ;
• an antenna comprising at least one turn (26a) that extends between two ends (26b, 26c), the antenna being formed by a wire that is inlaid in the thickness of the first substrate (30) from the first face (30a), each of the two ends (26b, 26c) presenting a zigzag shape formed by at least two rectilinear portions (32) and by two bends (34);
**characterized in that** the bends (34) are inlaid more deeply than the rectilinear portions (32) in the thickness of the first substrate (30) from the first face (30a).

2. An antenna support according to claim 1, wherein the bends (34) are inlaid to a depth of not less than 20 µm relative to the rectilinear portions (32).

3. An electronic document comprising:
• an antenna support (28) according to claim 1 or 2; and
• a second substrate assembled to the first substrate (30) so that the antenna is trapped between the two substrates;
• an open cavity (20) including a bottom in which at least a machined section (31) of a rectilinear portion of the ends (26b, 26c) of the antenna are apparent;
• electrical connection means covering at least part of the machined sections (31) of a rectilinear portion of the ends (26b, 26c) of the antenna;
• a microcircuit module (14) inserted and fastened in the cavity (20) and in electrical contact with the machined sections (31) via the connection means.

4. An electronic document according to claim 3, wherein the electrical connection means is an anisotropic adhesive covering the machined sections (31) of the rectilinear portions (32).

5. An electronic document according to claim 3 or 4, wherein the cavity (20) is formed by a first spot face (22) and a secondary spot face (24) made in the first spot face (22), the machined sections being apparent in the bottom of the first spot face (22).

6. A fabrication method for fabricating an antenna support according to claim 1 or 2, **characterized in that** it includes at least one step of inlaying the wire antenna (26) in the first substrate (30) by means of a tool adapted to dispense and inlay the wire.

7. A fabrication method according to claim 6, wherein the tool travels at a speed relative to the substrate (30), the speed v1 at which the bends (34) are laid being no more than 0.75 times the speed v2 at which the rectilinear portions (32) are laid.

8. A fabrication method according to claim 6 or 7, wherein the tool exerts a bearing force against the first substrate (30), the bearing force applied for laying the bends (34) being not less than 1.25 times the force applied for laying the rectilinear portions.

9. A fabrication method according to any one of claims 6 to 8, wherein the tool dispenses and inlays the wire by ultrasound at a determined frequency, the frequency applied for laying the bends (34) being not less than 1.25 times the frequency applied for laying the rectilinear portions.

10. A method of fabricating an antenna support according to any one of claims 6 to 9, wherein the rectilinear portions (32) are spaced apart from one another at a gap of not less than the diameter of the antenna wire (26).

11. A fabrication method for fabricating an electronic document according to any one of claims 3 to 5, the method being **characterized in that** it comprises the following steps:
• fabricating an antenna support (28) by the method according to any one of claims 6 to 10;
• assembling at least one second substrate (30) by a lamination step;
• machining an open cavity (20) presenting a depth such that a machined section of a rectilinear portion is apparent in the bottom of the cavity (20); and
• placing the microcircuit module (14) in the cavity (20) and making an electrical connection between the module (14) and the ends (26b, 26c) of the antenna (26).

12. A fabrication method for fabricating an electronic document according to claim 11, wherein the machining is performed in such a manner that the machined section (31) of a rectilinear portion presents a width lying in the range 0.4 times to 0.6 times the diameter of the antenna wire (26).

13. A fabrication method according to claim 11 or claim 12, including a step of depositing an anisotropic adhesive between the module (14) and the bottom of the cavity, prior to the step of putting the microcircuit module (14) into place, followed by a step of pressing the module (14) into the cavity (20) in order to bond the module (14) in the cavity (20) and activate the electrical connection.
